Europäisches Patentamt

European Patent Office

Office européen des brevets

(11) Veröffentlichungsnummer : **0 485 714 B1**

(12) **EUROPÄISCHE PATENTSCHRIFT**

(45) Veröffentlichungstag der Patentschrift :
25.05.94 Patentblatt 94/21

(51) Int. Cl.⁵ : **B29C 67/22**

(21) Anmeldenummer : **91115710.5**

(22) Anmeldetag : **17.09.91**

(54) Steuerverfahren zum Schäumen und Sintern von Kunststoff.

(30) Priorität : **16.11.90 DE 4036563**

(43) Veröffentlichungstag der Anmeldung :
**20.05.92 Patentblatt 92/21**

(45) Bekanntmachung des Hinweises auf die
Patenterteilung :
**25.05.94 Patentblatt 94/21**

(84) Benannte Vertragsstaaten :
**AT BE CH DE DK FR GB IT LI LU NL SE**

(56) Entgegenhaltungen :
**EP-A- 0 112 501**
**EP-A- 0 224 103**
**US-A- 4 630 484**
**PATENT ABSTRACTS OF JAPAN vol. 7, no. 9
(M-185)(1154) 14.Januar 1983 & JP-A-57 167
221 (KANEGA FUCHI KAGAKU KOGYO) 15.
Oktober 1982**

(56) Entgegenhaltungen :
**WORLD PATENTS INDEX LATEST Derwent
Publications Ltd, London, GB AN 87-309458
[44], DW8744 & JP-A-62216734 (SEKI Y) 24
Sept 1987
WORLD PATENTS INDEX LATEST Derwent
Publications Ltd, London, GB AN 89-361088
[49], DW8949 & JP-A-1271225 (SEKI Y) 30 Oct
1989**

(73) Patentinhaber : **HÜLS
AKTIENGESELLSCHAFT
D-45764 Marl (DE)**

(72) Erfinder : **Bollmann, Werner
Albert-Schweitzer-Strasse 8
W-4358 Haltern (DE)**
Erfinder : **Schatz, Gerhard
Wagnerstrasse 25
W-4408 Dülmen (DE)**
Erfinder : **Zawada, Hans-Günter
Siegfriedstrasse 59
W-4370 Marl (DE)**

EP 0 485 714 B1

**Beschreibung**

Die Erfindung betrifft ein Verfahren zum Herstellen von Schaumstoffkörpern aus vorgeschäumten noch blähfähigen kleinteiligen Polymerisaten, z. B. Vorschaumperlen. Ein Verfahren dieser Art ist beispielsweise aus der EP-A-0 112 501 oder der EP-A-0 224 103 bekannt.

Die Polymerisate können z. B. Polyolefine oder Polystyrol oder deren Copolymerisate sein. Die kleinteiligen Polymerisate werden in nicht gasdicht schließende Formen oder Kanäle eingefüllt und diskontinuierlich oder kontinuierlich mittels Wasserdampf auf eine Temperatur oberhalb des Erweichungspunktes der blähfähigen Polymerisate gebracht, wobei während der einzelnen Phasen des Bedampfens eine bestimmte Dampfmasse in die Schäumvorrichtung eingeleitet wird.

Die Erfindung bezweckt, die Schwankung der Eigenschaften der Schaumstoffkörper herabzusetzen und dadurch die Qualität der Schaumstoffkörper zu erhöhen, ohne unwirtschaftlich große Dampfmengen einzusetzen.

Schaumstoffkörper aus vorgeschäumten, d. h. aus bereits im geringen Ausmaß geschäumten Teilchen, werden z. B. hergestellt, indem man die vorgeschäumten Teilchen in eine doppelwandige nicht gasdichte Vorrichtung mit stellenweise perforierten Innenwänden einfüllt und in die geschlossene Vorrichtung kurzzeitig Wasserdampf von 0,5 bis 5 bar einleitet. Dadurch werden die Teilchen ausgeschäumt und gleichzeitig unter dem inneren Expansionsdruck miteinander versintert. Die Schäumvorrichtung besteht in der Regel aus zwei Teilen, dem Kern und der Haube, wobei die den Schaumstoffkörper begrenzende Form bevorzugt im Kern liegt. Beim Bedampfen strömt der Dampf in die die Form umgebenden Dampfkammern und dringt durch die Schlitz- oder Lochdüsen der Formwand in die Form ein, in der er seine Energie an die Vorschaumperlen abgibt.

Der Dampf wird in mehreren, etwa 1 bis 10 Sekunden dauernden Verfahrensschritten in die Schäumvorrichtung geleitet. Zunächst werden die Dampfkammern bei offenen Kondensatventilen gespült, um die kalten Luftnester herauszudrücken. Beim anschließenden Querbedampfen wird das Dampf-Luft-Gemisch aus den Zwischenräumen der Vorschaumperlen verdrängt. Dabei wird der Dampf z. B. in den Dampfraum des Kerns eingeleitet und aus dem geöffneten Kondensatventil der Haube abgeleitet, während das Ventil in der Dampfzuleitung zu der Haube und das Kondensatventil des Kerns geschlossen sind. Beim darauf folgenden Autoklav-Bedampfen werden die Perlen im gesamten Schaumstoffkörper gleichmäßig miteinander verschweißt. In dieser Phase sind die Ventile in den Dampfleitungen für die Haube und den Kern geöffnet, und beide Kondensatventile sind geschlossen. An das Autoklav-Bedampfen schließt sich die Druckabbauzeit an. (VDI-Handbuch 1984: Expandierbares Polystyrol (EPS), S. 90-91). Gegebenenfalls wird die Dampfkammer zwischen dem Querbedampfen und dem Autoklav-Bedampfen nochmals gespült. Die Schäumvorrichtung kann vor dem Bedampfen evakuiert werden.

Während jedes Verfahrensschrittes muß den Dampfkammern und/oder den Vorschaumperlen eine bestimmte Dampfmenge zugeführt werden, die zeitlich gesteuert wird. Die Dampfmenge wird über eine genormte Meßblende gemäß DIN 1952 gemessen. Diese Methode ist jedoch, speziell bei den kurzen Bedampfungsphasen, nicht zufriedenstellend, da unter den üblichen Betriebsbedingungen der Dampfdruck und die Dampftemperatur erfahrungsgemäß nicht als zeitlich konstant angenommen werden können.

Die Berechnung der Dampfmenge mit Hilfe des Ruths-Speicherdiagrammes behindert die laufende Produktion. Die Berechnung der Dampfmenge aus der hinter der Vorrichtung abgeschiedenen Kondensatmenge ist praktisch gar nicht möglich, da ein Teil des Dampfes aus der nicht gasdichten Vorrichtung austritt und nicht im Kondensat erscheint, und ein weiterer Teil des Dampfes in der Vorrichtung und im Schaumstoffkörper verbleibt (VDI-Handbuch 1979: Expandierbares Polystyrol (EPS), S. 80-82).

Das Aufschäumverhalten der Vorschaumperlen und die Eigenschaften des Schaumstoffkörpers werden nachhaltig durch die während der einzelnen Verfahrensschritte jeweils zugeführte Dampfmenge bestimmt. Unzureichende Dampfmengen oder Schwankungen der Dampfmenge machen sich in einer zu großen Ungleichmäßigkeit und in nicht hinreichender Gebrauchstüchtigkeit der Schaumstoffkörper störend bemerkbar. Bereits wenn die optimale Dampfmenge um 10 % unterschritten wird, können praktisch unbrauchbare Schaumstoffkörper entstehen. Zu den wichtigen Eigenschaften des Schaumstoffkörpers gehören die Biegefestigkeit und der Biegewinkel beim Bruch, die z. B. auf einer in DE-U-84 10 443 beschriebenen Vorrichtung gemessen werden.

Der Erfindung liegt die Aufgabe zugrunde, Schaumstoffkörper mit gleichbleibend hoher Qualität herzustellen, ohne eine überhöhte Dampfmenge einzusetzen.

Diese Aufgabe wird erfindungsgemäß gelöst durch ein Verfahren, dessen kennzeichnende Merkmale in Anspruch 1 angegeben sind.

Vorteilhafte Weiterbildungen der Erfindung ergeben sich aus den abhängegen Ansprüchen 2 bis 5.

Der der Vorrichtung zugeführte Massenstrom des Dampfes und die eingeleitete Dampfmasse werden berechnet aus der Strömungsgeschwindigkeit, dem Druck und der Temperatur des Dampfes; diese drei Größen

2

werden in unmittelbarer Nähe des Dampfeintrittes in die Schäumvorrichtung gemessen.

Für die Berechnung wird ein automatisch arbeitendes Durchflußmeßgerät eingesetzt, das in einem zeitlichen Abstand von mindestens 0,001 Sekunden jeweils einen Wert für die seit Beginn des Bedampfens und/oder seit Beginn einer Bedampfungsphase eingeleitete Dampfmasse sowie einen Wert für den momentanen Massenstrom des Dampfes liefert.

Das Durchflußmeßgerät ist mit einem Rechengerät verbunden, in welchem die vom Durchflußmeßgerät ausgegebenen Ergebnisse gespeichert werden. Das Rechengerät ist weiter mit der Schäumvorrichtung verbunden, von der es die Dauer der einzelnen Bedampfungsphasen übernimmt oder an die es gegebenenfalls die Sollwerte der Dauer der Bedampfungsphasen übergibt. Von der Schäumvorrichtung aus werden die Ventile in den Dampfzuleitungen und in den Kondensatableitungen für Haube und Kern in bekannter Weise zeitlich gesteuert.

Die günstigsten Werte für die Dampfmasse in jeder Bedampfungsphase, die Temperatur und den Druck des Dampfes sowie für den Massenstrom werden in Vorversuchen ermittelt und je nach den Anforderungen, die an den vorliegenden Schaumstoffkörper gestellt werden, festgelegt, in das Rechengerät eingegeben, dort gespeichert und für den Vergleich von Sollwert und Istwert bereitgehalten.

Bei der einfachsten Durchführung des erfindungsgemäßen Verfahrens werden zunächst in einem oder mehreren Vorversuchen verschiedene Werte für das Bedampfen des vorgegebenen Schaumstoffkörpers gewählt. Bei jedem dieser Vorversuche werden die Strömungsgeschwindigkeit, der Druck und die Temperatur des Dampfes - wie angegeben - gemessen, und daraus wird die Dampfmasse für jede Bedampfungsphase berechnet und notiert. Außerdem wird die Dauer jeder Bedampfungsphase notiert. Für alle Schaumstoffkörper aus den Vorversuchen werden die Istwerte der wichtigen Merkmale ermittelt; bei deren Vergleich mit vorgegebenen Sollwerten erhält man die günstigsten Bedingungen für das Bedampfen. Die entsprechende Dauer der einzelnen Bedampfungsphasen wird an der (automatisch arbeitenden) Schäumvorrichtung eingestellt.

Für die folgenden Bedampfungsvorgänge wird die Dauer der so erhaltenen Bedampfungsphasen zunächst beibehalten, und für jeden Bedampfungsvorgang wird die Dampfmasse für jede Bedampfungsphase aus den Meßwerten mittels des Durchflußmeßgerätes errechnet. Sobald die berechnete Dampfmasse innerhalb der zunächst unveränderten Dauer der einzelnen Bedampfungsphasen außerhalb eines vorgegebenen Toleranzbereiches liegt, der sich ebenfalls aus den Vorversuchen abschätzen läßt, gibt das Rechengerät ein Signal und zeigt an, in welcher Richtung die Dauer der einzelnen Bedampfungsphasen für die folgenden Bedampfungen zu verändern ist. Jede dieser vom Rechengerät angezeigten Veränderungen gibt Hinweise auf die im Bereich der Dampfversorgung und/oder im Bereich der Schäumvorrichtung eingetretenen Veränderung, bevor sich die Eigenschaften der Schaumstoffkörper wesentlich verändern.

In einer weiteren Ausführungsform des erfindungsgemäßen Verfahrens steuert das Rechengerät direkt die Dauer der einzelnen Bedampfungsphasen anhand des Sollwert-Istwert-Vergleiches aus der jeweils vorhergehenden Bedampfung.

In einer weiteren Ausführungsform des erfindungsgemäßen Verfahrens wird die Schäumvorrichtung nicht mehr über die Dauer der Bedampfungsphasen gesteuert, sondern das Rechengerät schaltet die Ventile an der Schäumvorrichtung um, sobald die während jeder Bedampfungsphase gemessene/berechnete Dampfmasse ihren Sollwert erreicht hat. Ferner kann das Rechengerät auch die Steuerung der gegebenenfalls vorhandenen Vakuumpumpe übernehmen.

Die Strömungsgeschwindigkeit des Dampfes wird beispielsweise mit einem handelsüblichen Wirbelströmungs-Durchflußmeßgerät gemessen; der Wirbelströmungs-Meßaufnehmer arbeitet nach dem Kármánschen Wirbelprinzip. Die Frequenz der am Störungskörper des Meßaufnehmers erzeugten Kármán-Wirbel ist der Strömungsgeschwindigkeit des Dampfes proportional. Druck und Temperatur des Dampfes werden ebenfalls mit handelsüblichen Geräten gemessen. Auch das Rechengerät ist handelsüblich, jedoch für dieses Verfahren entsprechend vorgerichtet.

Das erfindungsgemäße Verfahren hat folgende Vorteile:
- Die Dampfmasse und der Massenstrom des Dampfes werden in Zeitabständen berechnet, die kleiner sind als die Dauer einer Bedampfungsphase und viel kleiner sind als die Dauer eines Bedampfungsvorganges, der für die Herstellung eines Schaumstoffkörpers benötigt wird.
- Kurzzeitige Schwankungen des Druckes und der Temperatur des Dampfes werden sicher erfaßt und bei der Berechnung der Dampfmasse und des Massenstromes berücksichtigt.
- Falls mehrere Schäumvorrichtungen aus einer Leitung mit Dampf versorgt werden, beeinflussen die dadurch entstehenden Schwankungen des Dampfzustandes die Eigenschaften der Schaumstoffkörper nicht mehr.
- Das Verfahren ist wirtschaftlicher als die bisher üblichen Verfahren. Während jeder Bedampfungsphase wird nur die Dampfmasse in die Vorrichtung geleitet, die zum Erreichen der geforderten Qualität der Schaumstoffkörper benötigt wird. Schaumstoffkörper mit nicht hinreichender Qualität wegen einer zu

3

kleinen Dampfmasse beim Beschäumen entstehen nicht mehr.

- Die Dampfmasse kann für jeden einzelnen Schaumstoffkörper während jeder der einzelnen Bedampfungsphasen berechnet und zum Steuern des folgenden Bedampfungsvorganges herangezogen werden.
- Das einwandfreie Arbeiten der Ventile für die Dampfzufuhr und die Kondensatableitung ist zwischen zwei Bedampfungsvorgängen zu erkennen. Nicht einwandfrei arbeitende Ventile verraten sich z. B. durch einen Verbrauch an Schleichdampf.
- Der Verschmutzungsgrad der Düsen in der Formwandung ist zu erkennen durch den Vergleich der Dauer der einzelnen Bedampfungsphasen nach einer längeren Betriebszeit der Schäumvorrichtung mit der Dauer der entsprechenden Bedampfungsphasen zu Beginn der Betriebszeit, wenn die Düsen noch sauber sind.

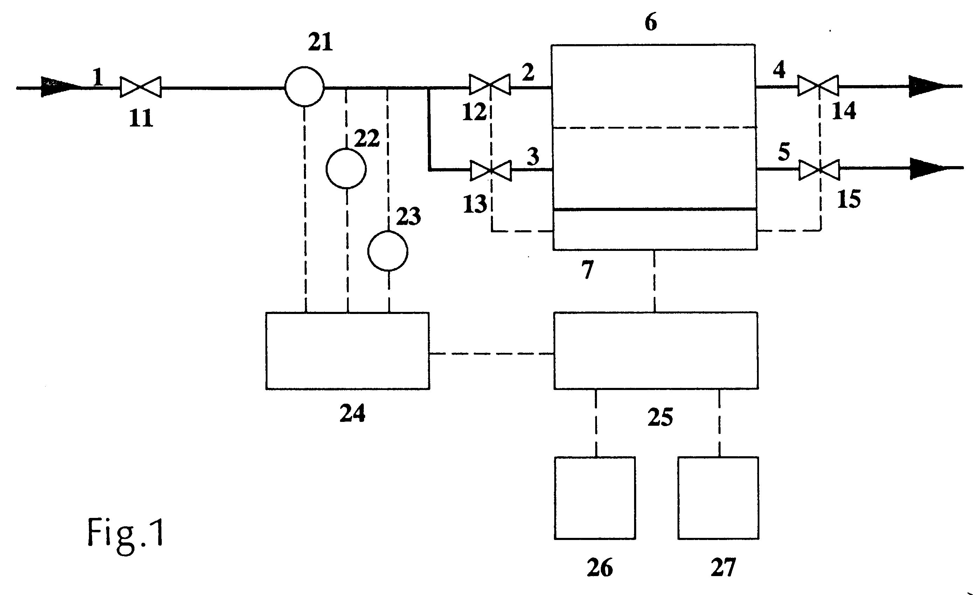

Das erfindungsgemäße Verfahren wird beispielsweise mit der in Figur 1 dargestellten Vorrichtung durchgeführt.

Die Dampfzuleitung (1), bevorzugt mit Reduzierventil (11), ist mit der Schäumvorrichtung (6) zum Herstellen von Schaumstoffkörpern verbunden. Die Dampfleitung (2) führt zu der Haube, die Dampfleitung (3) zum Kern der Vorrichtung. An Haube und Kern ist jeweils eine Kondensatableitung (4) bzw. (5) vorhanden. Sämtliche Leitungen haben jeweils ein Ventil (12), (13), (14) und (15); diese Ventile werden vom Steuergerät (7) gesteuert. Kurz vor der Verzweigung der Dampfleitung (1) sind der Wirbelströmungs-Meßaufnehmer (21), der Druckfühler (22) und der Temperaturfühler (23) in die Leitung (1) eingebaut. Diese drei Meßvorrichtungen sind mit dem Durchflußmeßgerät (24) elektrisch verbunden. Das Gerät (24) ist mit dem Rechengerät (25) elektrisch verbunden und dieses mit dem zur Schäumvorrichtung (6) gehörenden Steuergerät (7). An das Rechengerät können ein Schreiber (26) und ein Bildschirm (27) angeschlossen sein.

Aus den dem Durchflußmeßgerät (24) zugeleiteten Meßsignalen für Strömungsgeschwindigkeit, Druck und Temperatur berechnet dieses für jede der einzelnen Bedampfungsphasen die Dampfmasse und den Massenstrom und leitet diese Werte an das Rechengerät (25) weiter. Mittels Bildschirm (27) und Schreiber (26) kann der zeitliche Verlauf des Massenstromes und der Dampfmasse für jeden Bedampfungsvorgang sichtbar gemacht werden.

Das Rechengerät (25) erhält von dem Steuergerät (7) die Dauer der einzelnen Bedampfungsphasen und/oder gibt - bei Bedarf - die geänderte Dauer der Bedampfungsphasen an das Steuergerät.

Die Erfindung wird an folgenden Beispielen weiter erläutert.

Beispiel 1: Ermitteln der Dampfmasse und Steuern der Schäumvorrichtung

Vor der Schäumvorrichtung ist ein handelsüblicher Wirbelströmungs-Meßaufnehmer (Yokogawa YF 100) zum Messen der Strömungsgeschwindigkeit eingebaut. Dieser Meßaufnehmer gibt elektrische Impulse im Kilohertz-Bereich ab, die gemeinsam mit den Signalen von Temperatur- und Druckfühler dem Durchflußmeßgerät zugeführt werden. Unter Einbeziehung stoffabhängiger Parameter und Konstanten (wie Dichte und Reynoldszahl) berechnet das Durchflußmeßgerät die Masse des durch die Leitung geströmten Dampfes und den Massenstrom. Das Durchflußmeßgerät ist z. B. auf 1 g Dampf pro Impuls eingestellt. Die Impulse des Durchflußmeßgerätes werden an das Rechengerät weitergeleitet, wo sie während der Dauer jeder Bedampfungsphase kumuliert werden. Die Umschaltzeitpunkte der Ventile an der Schäumvorrichtung werden von dem Steuergerät dem Rechengerät zugeleitet.

Das Rechengerät vergleicht die in die Schäumvorrichtung während jeder Bedampfungsphase eingeleitete Dampfmasse mit dem entsprechenden Sollbereich und gibt ein Signal ab, sobald ein Istwert der Dampfmasse außerhalb seines Sollbereiches liegt. Anschließend wird die Dauer jener Bedampfungsphasen für die folgenden Bedampfungen direkt vom Rechengerät verändert, bei denen die Dampfmasse außerhalb ihres jeweiligen Sollbereiches gelegen hat. Das Rechengerät gibt ein anderes Signal ab, sobald der Istwert der Dauer einer Bedampfungsphase außerhalb des zugehörenden Sollbereiches liegt. In diesem Falle sind die Dampfversorgung und/oder die Funktion der Schäumvorrichtung zu prüfen und in den normalen Arbeitsbereich zu bringen.

Beispiel 2: Messen der Dampfmasse und des Massenstromes während einer Bedampfung

In Tabelle 1 sind die Ergebnisse zusammengestellt, die während eines Bedampfungsvorganges nach dem erfindungsgemäßen Verfahren gewonnen wurden. In der Praxis wird ein bestimmter Bedampfungsvorgang sehr häufig wiederholt, deshalb wird der Bedampfungsvorgang auch Zyklus genannt. In der graphischen Darstellung sind die Dampfmasse und der Massenstrom über der Zykluszeit aufgetragen. Bei diesem Beispiel dauert der Bedampfungszyklus 9,8 Sekunden und umfaßt die Phasen

1,5 Sekunden Spülen

4,0 Sekunden Querbedampfen

1,0 Sekunden Spülen

3,3 Sekunden Autoklav-Bedampfen.

An das Autoklav-Bedampfen schließt sich die Druckabbauzeit an, die viele Sekunden dauert und über die in der graphischen Darstellung der Tabelle 1 erfaßte Zeit weit hinausgeht. Die während der Bedampfungsphasen zugeführte Dampfmasse und der momentane Massenstrom des Dampfes am Ende jeder Bedampfungsphase sind ebenfalls angegeben. Für den vorliegenden Schaumstoffkörper wurden der Schäumvorrichtung insgesamt 1621 g Dampf zugeführt.

Die Eigenschaften des fertigen Schaumstoffkörpers werden stichprobenartig an herausgesägten Prüfkörpern gemessen.

Beispiel 3: Auswirkung unterschiedlicher Dampfmassen beim Schäumvorgang auf die Eigenschaften des Schaumstoffkörpers

Auf einer handelsüblichen evakuierbaren Schäumvorrichtung, die mit der entsprechenden Form für den herzustellenden Schaumstoffkörper ausgerüstet ist, wird ein ca. 200 g schwerer Schaumstoff-Hohlkörper aus EPS hergestellt, der die Abmessungen 440 mm · 440 mm · 150 mm bei 25 mm Wanddicke hat. Die Schäumvorrichtung wird unter Anwendung des erfindungsgemäßen Verfahrens mit Wasserdampf von 1,2 bar beschickt. Die gesamte Bedampfungszeit wird stufenweise von 7,5 Sekunden auf 11,5 Sekunden erhöht; jede Bedampfung wird aufgeteilt in 10 % Spülen der Dampfkammern, 45 % Querbedampfen, 15 % Spülen der Dampfkammern und 30 % Autoklav-Bedampfen.

Bei jeder der gewählten Bedampfungszeiten wird ein Schaumstoffkörper bei unveränderter relativer Dauer der Bedampfungsphasen mit verschieden großen Dampfmengen hergestellt. Aus diesen probeweise hergestellten Schaumstoffkörper werden Prüfkörper mit den Abmessungen 340 mm · 50 mm · 25 mm herausgesägt. Daran werden der Biegewinkel beim Bruch und die Biegefestigkeit nach den in DE-G 84 10 443 beschriebenen Verfahren gemessen; außerdem werden die Dicke der Probekörper und der Wassergehalt bestimmt.

Die Ergebnisse sind in Tabelle 2 enthalten. Wie man daran erkennt, müssen für den hier vorliegenden Schaumstoffkörper bei der oben angegebenen relativen Dauer der vier Bedampfungsphasen insgesamt zwischen 1760 g und 1800 g Dampf eingesetzt werden, damit der Schaumstoffkörper die geforderten Eigenschaften hat. Beträgt die gesamte Dampfmasse zwischen 1700 g und 1400 g, erhält man Schaumstoffkörper mit zu kleinem Biegewinkel und zu kleiner Biegekraft beim Bruch.

## Tabelle 2 (für Beispiel 3)

| Gesamte Bedampf- ungszeit s | Gesamtmasse des Dampfes g | Biegewinkel beim Bruch Grad | Biegekraft beim Bruch N | Dicke mm | Wasser- gehalt % |
|---|---|---|---|---|---|
| 7,5 | 1380 | 5 | 0,40 | 24,9 | - |
| 8,4 | 1490 | 9 | 0,55 | 25,1 | 27,7 |
| 9,6 | 1585 | 13,5 | 0,76 | 25,2 | 13,8 |
| 10,7 | 1755 | 19 | 1,05 | 25,9 | 7,9 |
| 11,9 | 1890 | 19,5 | 1,05 | 25,8 | 3,1 |

# Tabelle 1 ( für Beispiel 2)

Test - Nr.:  19  Datum: 23 Oct 1990

Gesamtverbrauch      1621    [ g Dampf]

Gesamtzyklenzeit      9.8      [sec]

Dampfmasse pro Zyklus         [kg]     — — —

Massenstrom des Dampfes [10^3 kg/h]    ————

| Dauer des Teilzyklus [ sec ] | Dampfmasse pro Teilzyklus [ kg ] | Massenstrom am Ende des Teilzyklus [kg/h] |
|---|---|---|
| 1.5 | .20 | 717 |
| 4.0 | .94 | 775 |
| 1.0 | .27 | 814 |
| 3.3 | .22 | 0 |

| Fertigteileigenschaften für Schaumstoffkörper aus EPS gemessen am Prüfkörper  50mm * 25mm * 340mm | | |
|---|---|---|
| Wassergehalt | [ % ] | 3.6 |
| Biegewinkel | [Grd] | 22 |
| Biegekraft beim Bruch | [ N ] | 0.95 |

EP 0 485 714 B1

**Patentansprüche**

1. Verfahren zum Herstellen von Schaumstoffkörpern durch Einwirken von Wasserdampf auf in einer Schäumvorrichtung befindliche blähfähige Polymerisate, gekennzeichnet durch
   - Messen der Strömungsgeschwindigkeit, des Druckes und der Temperatur des der Vorrichtung zugeführten Dampfes in unmittelbarer Nähe des Dampfeintrittes in die Schäumvorrichtung,
   - Berechnen der in die Vorrichtung geleiteten Dampfmasse mittels der gemessenen Werte für die Strömungsgeschwindigkeit, den Druck und die Temperatur des Dampfes in einem zeitlichen Abstand von mindestens 0,001 Sekunden,
   - Einstellen der Dampfmasse während der einzelnen Phasen des Bedampfens auf jeweils vorgegebene Werte durch Verändern der Phasendauer.

2. Verfahren nach Anspruch 1, gekennzeichnet durch
   - Messen der Strömungsgeschwindigkeit des Dampfes mittels eines Wirbelströmungs-Durchflußmeßgerätes.

3. Verfahren nach den Ansprüchen 1 und 2, gekennzeichnet durch
   - Zusätzliches Berechnen des Massenstromes des Dampfes.

4. Verfahren nach den Ansprüchen 1 bis 3, gekennzeichnet durch
   - Einstellen der Dampfmasse während der einzelnen Phasen des Bedampfens auf jeweils vorgegebene Werte durch Verändern der Phasendauer eines oder mehrerer Bedampfungsvorgänge, die auf einen Bedampfungsvorgang folgen, während dem bei vorgegebener Phasendauer die Dampfmasse berechnet wurde.

5. Verfahren nach den Ansprüchen 1 bis 3, gekennzeichnet durch
   - Einstellen der Dampfmasse während der einzelnen Phasen des Bedampfens auf jeweils vorgegebene Werte bei veränderlicher Phasendauer des Bedampfungsvorganges, während dem die Dampfmasse berechnet wurde.

**Claims**

1. A process for producing foam articles by the action of steam upon expandable polymers located in a foaming device, characterized by
   - measuring the flow velocity, the pressure and the temperature of the steam fed to the device in the immediate vicinity of the steam inlet into the foaming device,
   - calculating the mass of the steam passed into the device by means of the measured values for the flow velocity, the pressure and the temperature of the steam within a time interval of at least 0.001 second, and
   - adjusting the mass of the steam during the individual phases of steaming to particular preset values by varying the phase duration.

2. A process according to claim 1, characterized by
   - measuring the flow velocity of the steam by means of an eddy-current flowmeter.

3. A process according to either of claims 1 and 2, characterized by
   - additionally calculating the mass flow of the steam.

4. A process according to any of claims 1 to 3, characterized by
   - adjusting the steam mass during the individual phases of steaming to particular preset values by varying the phase duration of one or more steaming steps which follow a steaming step during which the steam mass was calculated at a preset phase duration.

5. A process according to any of claims 1 to 3, characterized by
   - adjusting the steam mass during the individual phases of steaming to particular preset values in the case of variable phase duration of the steaming step during which the steam mass was calculated.

**Revendications**

1.  Procédé de fabrication de corps en substance mousse par action de vapeur d'eau sur des produits de polymérisation gonflables se trouvant dans un dispositif de transformation en mousse,
    caractérisé par :
    - la mesure de la vitesse d'écoulement, de la pression et de la température de la vapeur délivrée au dispositif, à proximité directe de l'entrée de vapeur dans le dispositif de transformation en mousse,
    - le calcul de la masse de vapeur envoyée dans le dispositif, à l'aide des valeurs mesurées pour la vitesse d'écoulement, la pression et la température de la vapeur, ce dans un intervalle de temps de 0,001 seconde au moins,
    - l'ajustement de la masse de vapeur pendant les différentes phases du traitement à la vapeur, aux valeurs chaque fois prescrites, par modification de la durée des phases.

2.  Procédé selon la revendication 1,
    caractérisé par
    - la mesure de la vitesse d'écoulement de la vapeur à l'aide d'un appareil de mesure du débit d'un écoulement tourbillonnant.

3.  Procédé selon les revendications 1 et 2,
    caractérisé par
    - le calcul complémentaire du courant en masse de vapeur.

4.  Procédé selon les revendications 1 à 3,
    caractérisé par
    - l'ajustement de la masse de vapeur, pendant les différentes phases du traitement à la vapeur, aux valeurs prescrites chaque fois, ce par variation de la durée des phases d'un ou plusieurs processus de traitement à la vapeur qui suivent une opération de traitement à la vapeur lors de laquelle, la durée des phases étant fixée, on a calculé la masse de vapeur.

5.  Procédé selon les revendications 1 à 3,
    caractérisé par
    - l'ajustement de la masse de vapeur, pendant les différentes phases des traitements à la vapeur, aux valeurs chaque fois fixées lors de la durée variable des phases du processus de traitement à la vapeur, lors duquel la masse de vapeur a été calculée.

Fig.1

EP 0 485 714 B1